(19) Europäisches Patentamt / European Patent Office / Office européen des brevets

(11) **EP 2 557 526 A1**

(12) **DEMANDE DE BREVET EUROPEEN**

(43) Date de publication:
**13.02.2013 Bulletin 2013/07**

(51) Int Cl.:
***G06K 9/00*** *(2006.01)*     ***G06K 9/32*** *(2006.01)*
***G06F 3/033*** *(2013.01)*

(21) Numéro de dépôt: **12175820.5**

(22) Date de dépôt: **11.07.2012**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **13.07.2011 FR 1156445**

(71) Demandeur: **Commissariat à l'Énergie Atomique et aux Énergies Alternatives**
**75015 Paris (FR)**

(72) Inventeur: **Mainguet, Jean-François**
**38100 GRENOBLE (FR)**

(74) Mandataire: **Colombo, Michel et al**
**Brevinnov**
**324, rue Garibaldi**
**69007 Lyon (FR)**

(54) **Procédé d'acquisition d'un angle de rotation et des coordonnées d'un centre de rotation**

(57) Ce procédé d'acquisition d'un angle de rotation et des coordonnées d'un centre de rotation, comporte :
- la sélection (68, 84) dans une première image de N groupes $G_i$ différents de pixels, ces groupes $G_i$ de pixels étant alignés le long d'un même axe d'alignement et chaque groupe $G_i$ étant associé à une ordonnée xi respective le long de cet axe,
- pour chaque groupe $G_i$, le calcul (72) d'un déplacement $y_i$ du groupe $G_i$ entre les première et seconde images dans une direction perpendiculaire à l'axe d'alignement,
- le calcul (86) de l'angle de rotation et des coordonnées du centre de rotation à partir des coefficients « a » et « b » d'une droite de régression linéaire qui minimise la relation suivante :

$$\sum_{i=1}^{i=N} \| y_i - a x_i - b \|$$

où N est un nombre entier de groupes $G_i$, N étant supérieur ou égal à trois.

Fig. 7

EP 2 557 526 A1

**Description**

L'invention concerne un procédé d'acquisition d'un angle de rotation et des coordonnées d'un centre de rotation. L'invention a également pour objet un procédé de commande d'un écran et un support d'enregistrement d'informations pour la mise en oeuvre de ces procédés. L'invention concerne également un appareil équipé d'un écran et apte à mettre en oeuvre ce procédé de commande.

Des procédés connus d'acquisition d'un angle de rotation et des coordonnées d'un centre de rotation comportent :

- l'acquisition par un capteur électronique d'une première image d'un motif avant sa rotation autour d'un axe perpendiculaire au plan de l'image,
- la rotation du motif par rapport au capteur électronique, par un être humain, autour de l'axe perpendiculaire au plan de l'image,
- l'acquisition par le capteur électronique d'une seconde image du même motif après cette rotation, ces images étant formées de pixels enregistrés dans une mémoire électronique,
- la sélection, par un calculateur électronique, dans la première image de N groupes $G_i$ différents de pixels, ces groupes $G_i$ de pixels étant alignés le long d'un même axe d'alignement et chaque groupe $G_i$ étant associé à une ordonnée $x_i$ respective le long de cet axe, l'indice i identifiant le groupe $G_i$ parmi les N groupes $G_i$ de pixels,
- pour chaque groupe $G_i$, le calcul, par le calculateur électronique, d'un déplacement $y_i$ du groupe $G_i$ entre les première et seconde images dans une direction perpendiculaire à l'axe d'alignement en comparant les première et seconde images, la valeur du déplacement $y_i$ étant obtenue par calcul de corrélation entre des pixels de la première image appartenant au groupe $G_i$ et des pixels de la seconde image.

Par exemple, un tel procédé est divulgué dans la demande de brevet US 2005/0012714. Ce procédé est particulièrement simple et nécessite donc une puissance de calcul limitée pour être implémenté. Il peut donc être implémenté dans des appareils électroniques ayant des ressources informatiques limitées tels que des appareils électroniques portables et notamment des assistants personnels ou des téléphones mobiles.

Toutefois, dans ce procédé, l'angle de rotation est déterminé avec une précision médiocre. En effet, l'angle de rotation ne peut être calculé précisément que par rapport à un centre de rotation. Dans la demande de brevet US 2005/0012714, aucune méthode pour déterminer précisément la position du centre de rotation n'est divulguée. Plus précisément, dans cette demande de brevet, la position du centre de rotation est supposée être à l'intersection entre deux fenêtres, c'est-à-dire sensiblement au milieu du capteur électronique. Or une telle hypothèse ne rend pas compte correctement de la véritable position du centre de rotation. A cause de l'imprécision sur la détermination de la position du centre de rotation, l'angle de rotation calculé est également peu précis.

De façon générale, la détermination précise de la position du centre de rotation est une chose difficile. En effet, par définition, les amplitudes des déplacements du motif à proximité du centre de rotation sont faibles et présentent donc un rapport signal/bruit médiocre. Ainsi, d'autres méthodes pour acquérir un angle de rotation et les coordonnées du centre de rotation ont été envisagées. Par exemple, on peut se référer à la demande de brevet US 2001/0036299. Toutefois, ces méthodes font appel à des calculs complexes sur les images acquises qui nécessitent une puissance de calcul importante. Elles ne peuvent donc être implémentées que sur des appareils ayant des ressources informatiques importantes.

De l'état de la technique est également connu de :

- US5563403A,
- US4558461A,
- JP10027246A.

L'invention vise à remédier à cet inconvénient en proposant un procédé à la fois précis et simple d'acquisition de l'angle de rotation et des coordonnées du centre de rotation de manière à ce que ce procédé puisse être implémenté sur des appareils limités en puissance de calcul.

Elle a donc pour objet un procédé conforme à la revendication 1.

Le procédé ci-dessus est basé sur l'hypothèse que si les groupes $G_i$ de pixels sont alignés sur l'axe M d'alignement avant la rotation, alors après la rotation, ils doivent aussi être alignés sur un axe M' qui fait un angle « a » avec l'axe M, l'angle « a » étant l'angle de rotation. De plus, l'intersection entre les axes M et M' correspond au centre de rotation. En effet, une simple rotation ne doit pas modifier l'alignement des groupes $G_i$. Par conséquent, les coefficients « a » et « b », calculés par régression linéaire, permettent d'obtenir l'équation de l'axe M' et donc l'angle de rotation et les coordonnées du centre de rotation. Le fait de calculer les coefficients « a » et « b » par une régression linéaire permet de prendre en compte et de compenser au mieux des phénomènes parasites tels que :

- le mésalignement des groupes $G_i$ après la rotation causé par la déformation élastique du matériau dans lequel est réalisé le motif, et
- l'existence d'une translation du motif simultanée à sa rotation.

Dans le procédé ci-dessus, aucune connaissance particulière sur ce que représente les pixels des groupes Gi n'est nécessaire puisque le déplacement $y_i$

est calculé par corrélation entre les pixels de la première image appartenant au groupe $G_i$ et les pixels de la seconde image. Ainsi, le procédé décrit s'applique à tout motif n'ayant pas de symétrie de révolution.

Le procédé ci-dessus permet de déterminer bien plus précisément l'angle de rotation et les coordonnées du centre de rotation que le procédé décrit dans la demande de brevet US 2005/0012714. Par exemple, le procédé ci-dessus n'impose aucune hypothèse sur la position du centre de rotation et en particulier n'impose pas que l'ordonnée du centre de rotation soit à la limite entre deux groupes G, de pixels comme c'est le cas dans la demande de brevet US 2005/0012714.

Par ailleurs, le procédé ci-dessus n'utilise que N groupes $G_i$ de pixels alignés sur un même axe. Ainsi, il n'est pas nécessaire de réaliser les calculs sur l'ensemble des pixels de l'image. Cela limite le nombre d'opérations à réaliser et diminue donc la puissance de calcul nécessaire pour mettre en oeuvre ce procédé.

Le fait de calculer les coefficients « a » et « b » par régression linéaire simplifie également les calculs et limite également la puissance de calcul nécessaire à l'implémentation de ce procédé.

De ce fait, le procédé ci-dessus est particulièrement rapide à exécuter et ne nécessite pas une puissance de calcul importante pour être mis en oeuvre dans un temps raisonnable.

Les modes de réalisation de ce procédé peuvent comporter une ou plusieurs des caractéristiques des revendications dépendantes.

Ces modes de réalisation de ce procédé peuvent présenter en outre les avantages suivants :

- utiliser uniquement les pixels d'une fenêtre pour calculer l'angle de rotation et le centre de rotation permet de réduire le nombre d'opérations à réaliser et donc la puissance de calcul nécessaire pour implémenter ce procédé ;
- acquérir seulement les pixels contenus dans cette fenêtre permet d'augmenter la vitesse d'acquisition et de décroître la consommation électrique du capteur électronique ;
- découper la fenêtre en N secteurs Si permet également de réduire le nombre d'opérations à réaliser pour calculer l'angle et les coordonnées du centre de rotation ;
- la non-prise en compte du déplacement $y_i$ et de l'ordonnée $x_i$ si le déplacement $y_i$ dépasse un seuil prédéterminé, permet d'éliminer les points aberrants et donc d'accroître la précision du calcul sans augmenter le nombre d'opérations à réaliser ;
- régler l'intervalle de temps entre l'acquisition des première et deuxième images en fonction d'un angle précédemment calculé pour maintenir cet angle entre 0,5° et 10°, permet d'augmenter la précision du procédé car pour ces valeurs d'angle de rotation les première et seconde images se chevauchent suffisamment pour calculer précisément les déplacements $y_i$.

L'invention a aussi pour objet un procédé de commande d'un écran d'affichage, ce procédé comportant :

- la commande, par un calculateur électronique, de l'écran pour faire tourner un objet affiché sur cet écran en fonction d'un angle de rotation acquis et des coordonnées d'un centre de rotation, et
- l'acquisition de l'angle de rotation en mettant en oeuvre le procédé ci-dessus.

L'invention a également pour objet un support d'enregistrement d'informations, comportant des instructions pour l'exécution du procédé ci-dessus lorsque ces instructions sont exécutées par un calculateur électronique.

L'invention a également pour objet un appareil conforme à la revendication 9.

Les modes de réalisation de cet appareil peuvent comporter la caractéristique suivante :

■ le capteur électronique est un capteur d'empreinte digitale ou une souris optique.

L'invention sera mieux comprise à la lecture de la description qui va suivre, donnée uniquement à titre d'exemple non limitatif et faite en se référant aux dessins sur lesquels :

- la figure 1 est une illustration schématique d'un appareil apte à acquérir un angle de rotation et les coordonnées d'un centre de rotation ;
- la figure 2 est une illustration schématique d'un capteur électronique utilisé dans l'appareil de la figure 1 ;
- la figure 3 est une illustration schématique et partielle de la répartition de pixels du capteur électronique de la figure 2 sur une face sensible ;
- la figure 4 est un organigramme d'un procédé d'acquisition d'un angle de rotation et des coordonnées d'un centre de rotation ;
- les figures 5 et 6 sont des illustrations schématiques de traitement mis en oeuvre pour exécuter le procédé de la figure 4 ; et
- la figure 7 est une illustration schématique d'une fenêtre de pixels découpée en plusieurs secteurs utilisée par le procédé de la figure 4.

Dans ces figures, les mêmes références sont utilisées pour désigner les mêmes éléments.

Dans la suite de cette description, les caractéristiques et fonctions bien connues de l'homme du métier ne sont pas décrites en détail.

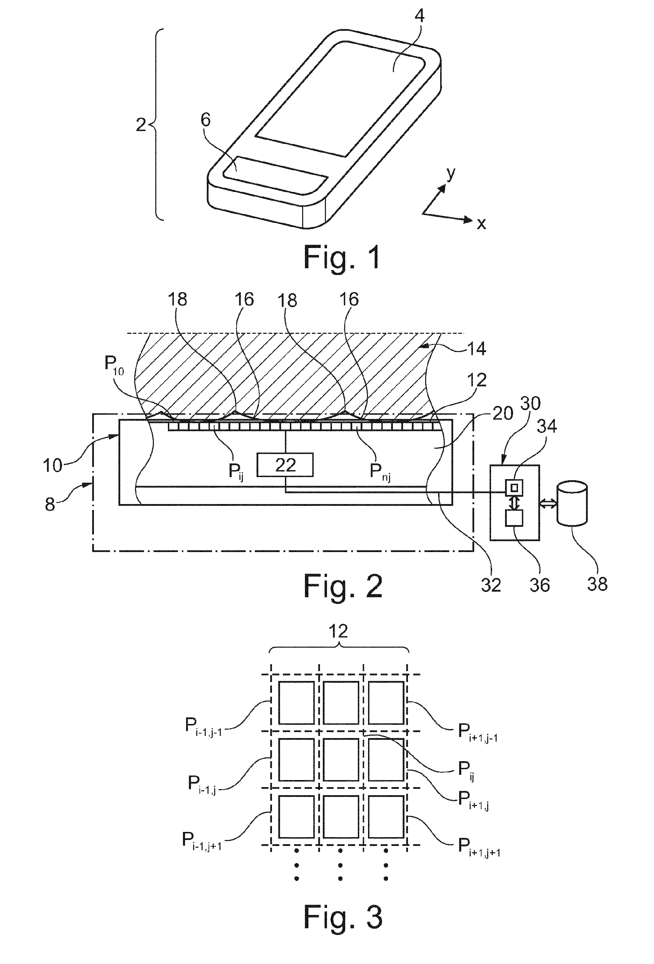

La figure 1 représente un appareil électronique 2 apte à acquérir un angle de rotation et les coordonnées d'un centre de rotation. A cet effet, il est équipé à titre d'exemple, d'un écran 4 et d'une interface homme-machine tactile 6. L'interface 6 est par exemple utilisée pour déplacer un objet affiché sur l'écran 4. Dans cette description, on s'intéresse plus particulièrement au déplacement en rotation de l'objet affiché sur l'écran 4. Pour déplacer en rotation un objet affiché sur l'écran 4, il faut au préalable acquérir via l'interface 6 un angle de rotation θ et des coordonnées C d'un centre de rotation.

Dans ce mode de réalisation, pour cela, l'utilisateur pose son doigt à l'emplacement du centre de rotation souhaité sur l'interface 6 puis tourne son doigt autour d'un axe perpendiculaire à la surface de l'interface 6 pour indiquer la valeur de l'angle θ souhaitée. Dans ce mode de réalisation, cette manoeuvre permet notamment à l'utilisateur d'indiquer la position du centre de rotation dans la direction X.

Le doigt d'un utilisateur porte un motif dépourvu de symétrie de révolution de sorte que l'angle θ de rotation de ce motif peut être détecté. Ici, ce motif est donc directement déplacé par l'utilisateur, c'est-à-dire un être humain. Dans le cas d'un doigt, ce motif est appelé « empreinte digitale ». L'empreinte digitale est formée de vallées ou creux séparés les uns des autres par des crêtes.

L'interface 6 est capable d'acquérir une image de l'empreinte digitale avec une résolution suffisamment fine pour discerner les creux et les crêtes.

Ici, l'image acquise est formée d'une matrice de pixels alignés en lignes horizontales parallèlement à une direction X et en colonnes parallèlement à une direction Y. Pour pouvoir discerner les creux et les crêtes, la plus grande largeur dans la direction X ou Y, des pixels est inférieure à 250 $\mu$m et, de préférence, inférieure à 100 ou 75 $\mu$m. Avantageusement, cette plus grande largeur est inférieure ou égale à 50 $\mu$m. Ici, les pixels sont des carrés de 50 $\mu$m de côté, ce qui correspond à une résolution d'environ 500 dpi (dot per inch).

La figure 2 représente plus en détail certains aspects de l'appareil 2 et, en particulier, un mode de réalisation particulier de l'interface homme-machine tactile 6. Dans ce mode de réalisation, l'interface 6 est réalisée à partir d'un capteur électronique 8 capable de détecter un motif thermique.

Un motif thermique est une répartition spatiale non homogène des caractéristiques thermiques d'un objet décelable à partir d'une puce électronique 10 du capteur 8. Un tel motif thermique est généralement porté par un objet. Dans ce mode de réalisation, une empreinte digitale est un motif thermique détectable par le capteur 8.

Par caractéristique thermique, on désigne les propriétés d'un objet qui sont fonctions de sa capacité thermique et de sa conductivité thermique.

Dans la suite de cette description, le capteur 8 est décrit dans le cas particulier où celui-ci est spécialement adapté à la détection d'une empreinte digitale. Dans ce cas particulier, le capteur 8 est plus connu sous le terme de capteur d'empreinte digitale.

La puce 10 présente une face sensible 12 sur laquelle doit être appliqué l'objet incorporant le motif thermique à relever. Ici, cet objet est un doigt 14 dont l'épiderme est directement en appui sur la face 12. L'empreinte digitale présente sur l'épiderme du doigt 14 se traduit par la présence de crêtes 16 séparées par des creux 18. Sur la figure 2, le doigt 14 est grossi plusieurs fois pour rendre visible les crêtes 16 et les creux 18.

Lorsque le doigt 14 est en appui sur la face 12, seules les crêtes 16 sont directement en contact avec la face 12. Au contraire, les creux 18 sont isolés de la face 12 par de l'air. Ainsi, la conductivité thermique entre le doigt et la face 12 est meilleure au niveau des crêtes 16 qu'au niveau des creux 18. Une empreinte digitale correspond donc à un motif thermique susceptible d'être relevé par la puce 10.

A cet effet, la puce 10 comprend une multitude de pixels $P_{ij}$ de détection disposés immédiatement les uns à côté des autres sur toute la face 12. Un pixel $P_{ij}$ de détection est la plus petite surface autonome capable de détecter une variation de température. Les variations de température détectées varient d'un pixel à l'autre selon que celui-ci est en contact avec une crête 16 ou en vis-à-vis d'un creux 18. Ici, chaque pixel de détection $P_{ij}$ correspond à un pixel de l'image acquise par ce capteur. C'est pour cette raison qu'on les appelle également « pixel ».

Ces pixels $P_{ij}$ sont réalisés sur un même substrat 20.

Un exemple de répartition des pixels $P_{ij}$ les uns à côté de autres est représenté sur la figure 3. Dans cet exemple, les pixels $P_{ij}$ sont répartis en lignes et en colonnes pour former une matrice de pixels. Par exemple, la puce 10 comprend au moins cinquante lignes d'au moins 300 pixels chacune.

Chaque pixel définit une fraction de la face 12. Ici, ces fractions de la face 12 sont rectangulaires et délimitées par des lignes en pointillée sur la figure 3. La surface de chaque fraction est inférieure à 1 mm$^2$ et, de préférence, inférieure à 0,5 ou 0,01 ou 0,005 mm$^2$. Ici, la fraction de la face 12 définie par chaque pixel $P_{ij}$ est un carré de 50 $\mu$m de côté. La distance entre le centre géométrique de deux pixels contigus est inférieure à 1 mm et, de préférence, inférieure à 0,5 ou 0,1 ou 0,01 ou 0,001 mm. Ici, la distance entre les centres des pixels $P_{ij}$ contigus est égale à 50 $\mu$m.

Chaque pixel comprend :

- un transducteur capable de transformer une variation de température en une différence de potentiels, et éventuellement
- une résistance chauffante capable de chauffer l'objet en contact avec ce transducteur.

La différence de potentiels représente « la mesure » de la variation de température dans le sens où, après calibration, cette différence de potentiels peut être directement convertie en une variation de température.

La résistance chauffante permet de mettre en oeuvre un procédé actif de détection comme celui décrit dans la demande de brevet publiée sous le numéro US 6 091 837 ou la demande de brevet déposée sous le numéro FR1053554 le 6 mai 2010.

Les procédés actifs de détection présentent plusieurs avantages dont notamment le fait de pouvoir fonctionner même si la température initiale des pixels est proche ou identique de celle de l'objet portant le motif thermique. Il est également possible d'ajuster le contraste en contrôlant la quantité de chaleur dissipée par la résistance de chauffage de chaque pixel.

Chaque pixel $P_{ij}$ est électriquement raccordé à un circuit 22 de lecture des mesures de variation de température réalisées par chacun de ces pixels. Plus précisément, le circuit 22 est apte :

- à sélectionner un ou plusieurs pixels $P_{ij}$ à lire,
- à commander la résistance chauffante du ou des pixels sélectionnés, et
- à lire la variation de température mesurée par le transducteur du ou des pixels sélectionnés.

Typiquement, le circuit de lecture est gravé et/ou déposé dans le même substrat 20 rigide que celui sur lequel sont réalisés les pixels $P_{ij}$. Par exemple, le substrat 20 est en silicium ou en verre.

Le capteur 8 est raccordé à un calculateur électronique 30 par une liaison filaire 32. Par exemple, ce calculateur 30 est équipé d'un module 34 de pilotage de la puce 10 et d'un module 36 de traitement.

Le module 34 permet de relever le motif thermique à partir des mesures des pixels de détection. Plus précisément, ce module est capable de construire une image des crêtes et des creux détectés par les différents pixels en fonction des mesures des pixels et de la position connue de ces pixels les uns par rapport aux autres.

Ici, le module 36 est capable, en outre, :

- de déterminer un angle de rotation et les coordonnées du centre de cette rotation à partir d'images successives acquises à l'aide du capteur 8, et
- de commander l'écran 6 pour faire tourner l'objet affiché en fonction de l'angle de rotation et des coordonnées du centre de rotation déterminés.

En complément, le module 36 est capable de comparer l'image de l'empreinte digitale acquise à des images contenues dans une base de données pour identifier cette empreinte digitale et, en réponse, autoriser et, en alternance, interdire certaines actions sur l'appareil 2.

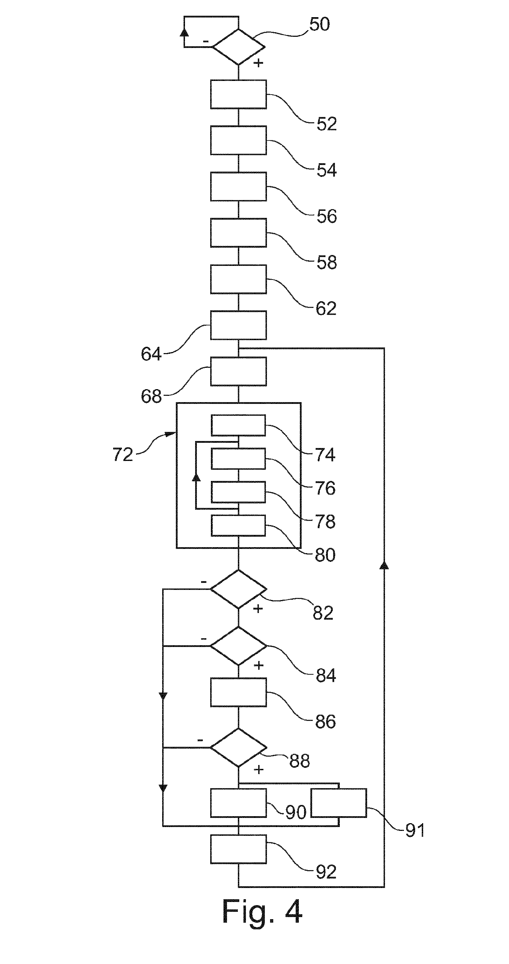

Typiquement, le calculateur 30 est réalisé à partir d'au moins un calculateur électronique programmable capable d'exécuter des instructions enregistrées sur un support d'enregistrement d'informations. A cet effet, le calculateur 30 est raccordé à une mémoire 38 contenant des instructions et les données nécessaires pour l'exécution du procédé de la figure 4. Les images acquises par le capteur 8 sont également enregistrées, par le module 34 dans la mémoire 38.

Pour d'autres détails sur la réalisation et le fonctionnement d'un tel capteur, il est possible de consulter, par exemple, la demande de brevet français déposée sous le numéro FR1053554 le 6 mai 2010.

Le fonctionnement de l'appareil 2 va maintenant être décrit en regard du procédé de la figure 4.

Initialement, lors d'une étape 50, le calculateur 30 vérifie à intervalle régulier la présence d'un doigt posé sur la face sensible 12 du capteur 8. Pour cela, par exemple, seul un sous-ensemble des pixels $P_{ij}$ du capteur 8 sont utilisés pour diminuer la consommation d'énergie de l'appareil 2. De plus, la vérification est faite à une fréquence peu élevée. Par exemple, la vérification est faite entre 20 et 25 fois par seconde.

Tant qu'aucun doigt n'est détecté sur la face 12, le procédé reste dans l'étape 50.

Dans le cas contraire, on procède à une étape 52 de réveil du capteur 8.

Ensuite, lors d'une étape 54, le capteur 8 procède à l'acquisition d'une première image de l'empreinte digitale à l'instant $t_1$ puis, après un intervalle de temps $\Delta T$, à l'acquisition d'une seconde image de l'empreinte digitale à un instant $t_2$. Typiquement, l'intervalle $\Delta T$ est suffisamment court pour que les première et seconde images se chevauchent. Par exemple, l'intervalle $\Delta T$ est au minimum égal à 1/800 s et de préférence compris entre 1/800 s et 1/400 s par défaut. Le module 34 enregistre ces images dans la mémoire 38.

Ensuite, on procède à une étape 56 de recherche d'une zone d'intérêt dans la première image. La zone d'intérêt est l'emplacement où le doigt touche la face 12. Par exemple, pour cela, le calculateur 30 sélectionne les pixels où il y a du signal. Ensuite, il utilise les pixels sélectionnés pour délimiter la zone d'intérêt. Par la suite, les pixels situés en dehors de cette zone d'intérêt ne sont pas utilisés pour les calculs décrits ci-dessous. La zone d'intérêt sélectionnée peut être plus grande que simplement la zone ou le doigt 14 touche la face 12. Par contre, la zone d'intérêt est plus petite, en nombre de pixels, que la face 12.

Lors d'une étape 58, le calculateur procède à la localisation grossière du centre de rotation en comparant les première et seconde images.

Par exemple, chaque pixel de la zone d'intérêt de la première image est soustrait au pixel occupant la même position dans la seconde image. On obtient ainsi une image « différentielle ». La soustraction d'un pixel à un autre consiste à calculer la différence entre les valeurs mesurées par le même pixel $P_{ij}$ du capteur 8 aux instants $t_1$ et $t_2$.

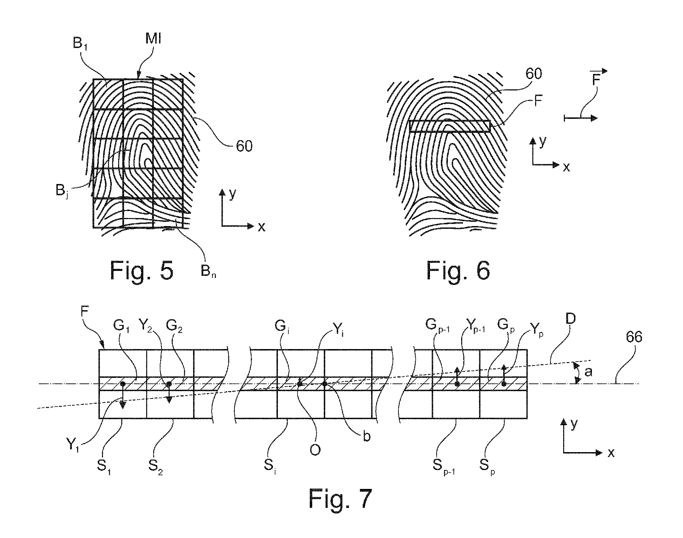

Ensuite, cette image différentielle est divisée pour former une matrice MI de blocs $B_j$ de pixels. Les blocs $B_j$ sont immédiatement contigus les uns aux autres et ne se chevauchent pas. Cette matrice MI est représentée sur la figure 5. Sur la figure 5, la zone d'intérêt est illustrée par une empreinte digitale 60 représentée en arrière-plan de la matrice MI. Chaque bloc $B_j$ de la

matrice MI contient le même nombre de pixels. Ici, chaque bloc est un carré de 8 pixels de côté. Sur la figure 5, la taille des blocs $B_j$ n'est pas à l'échelle par rapport à l'empreinte digitale

Ensuite, l'ensemble des pixels appartenant à un même bloc $B_j$ sont additionnés pour obtenir une valeur moyenne des pixels de ce bloc. La valeur associée à chaque pixel de l'image différentielle est la différence entre les valeurs de ce pixel aux instants $t_1$ et $t_2$. C'est cette valeur qui est additionnée aux valeurs associées aux autres pixels du même bloc pour obtenir la valeur moyenne des pixels de ce bloc.

Enfin, le calculateur 30 sélectionne en tant que centre de rotation le milieu du bloc $B_j$ qui a la plus faible valeur moyenne. En effet, les déplacements de l'empreinte digitale à proximité du centre de rotation sont beaucoup plus faibles que lorsqu'on est éloigné de ce centre de rotation. Ainsi, le bloc de pixel qui subit le moins de modification entre les instants $t_1$ et $t_2$ correspond à celui qui a la valeur moyenne la plus faible.

Lors d'une étape 62, le calculateur 30 positionne une fenêtre F (voir figure 6) centrée sur la position approximative du centre de rotation déterminée lors de l'étape 58. Cette fenêtre F est une fenêtre rectangulaire dont la longueur est au moins deux fois et, de préférence, au moins dix ou vingt fois plus grande que sa hauteur. Par exemple ici, la fenêtre F comporte 192 pixels sur sa longueur et seulement 8 pixels sur sa hauteur.

Seuls les pixels contenus dans cette fenêtre F sont utilisés pour calculer l'angle θ et les coordonnées C du centre de rotation. Grâce à cela, on limite considérablement le nombre d'opérations à réaliser par rapport au cas où tous les pixels de la zone d'intérêt seraient utilisés pour ce calcul. Cela rend donc l'exécution du procédé par le calculateur 30 beaucoup plus rapide et moins gourmand en ressource informatique.

La plus grande longueur de la fenêtre F s'étend dans une direction F. La direction F est telle que deux pixels immédiatement adjacents dans la direction F se trouvent à des adresses immédiatement consécutives dans la mémoire 38 où les images sont enregistrées. Ceci facilite l'accès aux données en mémoire et accélère les calculs car il n'est pas nécessaire de calculer l'adresse mémoire de chaque pixel. Il suffit simplement de les lire en séquence. Ici, la direction F est parallèle à la direction horizontale X.

Lors d'une étape 64, la fenêtre F est découpée en P secteurs $S_i$ rectangulaires immédiatement contigus les uns aux autres dans la direction X. Le nombre de secteurs est supérieur ou égal à trois et, de préférence, supérieur ou égal à six, dix ou vingt. De préférence, le nombre P est choisi pour que la largeur de chaque secteur $S_i$ dans la direction X soit comprise entre huit pixels et seize pixels. Ici, le nombre P est égal à vingt, ce qui correspond à une largeur pour chaque secteur $S_i$ de douze pixels. L'indice i identifie le secteur $S_i$ parmi l'ensemble des secteurs délimités dans la fenêtre F.

La fenêtre F et les secteurs $S_i$ sont représentés plus en détail sur la figure 7. Ici, tous les secteurs $S_i$ sont alignés le long d'un même axe horizontal 66. Sur la figure 7, les traits ondulés verticaux signifient que des portions de la fenêtre F ont été omises.

Lors d'une étape 68, le calculateur 30 sélectionne dans chaque secteur $S_i$ de la première image un groupe $G_i$ de pixels de sorte que tous les groupes $G_i$ sont alignés sur un même axe horizontal c'est-à-dire ici l'axe 66. Ici, l'axe 66 est parallèle à la direction X et traverse chaque secteur $S_i$ à mi-hauteur.

Par exemple, chaque groupe $G_i$ correspond aux deux lignes de douze pixels situées à mi-hauteur dans la direction Y du secteur $S_i$ dans la première image. Chaque groupe $G_i$ est associé à une ordonnée $x_i$ le long de l'axe 66. A cet effet, l'axe 66 comporte une origine O (figure 7) à partir de laquelle est décomptée l'ordonnée $x_i$. Ici, l'ordonnée $x_i$ de chaque groupe $G_i$ correspond au centre de ce groupe $G_i$ dans la direction X.

Lors d'une étape 72, pour chaque groupe $G_i$, le calculateur 30 calcule son déplacement vertical $y_i$ entre les instants $t_1$ et $t_2$ en comparant les première et seconde images. Chaque déplacement $y_i$ est contenu dans le plan de l'image et perpendiculaire à l'axe 66. Typiquement, le déplacement $y_i$ est obtenu par un calcul de corrélation entre les pixels du secteur Si dans les première et seconde images.

Par exemple, ici, le calculateur recherche la position du groupe $G_i$ dans le secteur Si de la seconde image. Pour cela, lors d'une opération 74, le calculateur construit un masque $M_i$ qui a la même forme que le groupe $G_i$ de pixels. Par exemple, dans ce mode de réalisation, le masque $M_i$ correspond à deux lignes horizontales de douze pixels chacune. Ensuite, lors d'une opération 76, le calculateur 30 positionne le masque $M_i$ dans le secteur Si de la seconde image après l'avoir décalé de $d_i$ pixels dans la direction X et de $y_i$ pixels dans la direction Y.

Lors d'une étape 78, le calculateur 30 soustrait chaque pixel contenu dans le masque $M_i$ au pixel correspondant du groupe $G_i$. Le pixel correspond du groupe est celui qui occupe la même position dans le masque $M_i$ et dans le groupe $G_i$. Ici, la soustraction d'un pixel $P_{ij}$ à un pixel $P_{mn}$ consiste à calculer la différence entre la valeur mesurée par le pixel $P_{ij}$ du capteur 8 à l'instant $t_1$ et la valeur mesurée par le pixel $P_{mn}$ du capteur 8 à l'instant $t_2$.

Les opérations 76 et 78 sont réitérées pour toutes les valeurs possibles de $d_i$ et $y_i$. Typiquement, le déplacement $d_i$ peut prendre toutes les valeurs comprises entre -6 et +5 pixels. Le déplacement $y_i$ peut prendre toutes les valeurs possibles comprises entre -3 et +4 pixels. Ici, l'origine des déplacements $y_i$ est considérée comme étant sur l'axe 66.

Lors d'une opération 80, le calculateur sélectionne la paire de valeurs $d_i$, $y_i$ qui correspond à la plus petite différence calculée lors de l'opération 78. En effet, c'est ce groupe de pixels sélectionné par le masque $M_i$ dans la seconde image qui est le plus corrélé avec le

groupe $G_i$ dans la première image.

A la fin de l'étape 72, on obtient les déplacements $d_i$ et $y_i$ de chaque groupe $G_i$.

Lors d'une étape 82, le calculateur 30 vérifie que le mouvement du doigt sur la face 12 est bien une rotation. Par exemple, il calcule la moyenne des déplacements $d_i$ obtenus à la fin de l'étape précédente. Ensuite cette valeur est comparée à un seuil prédéterminé $S_1$. Si ce seuil est franchi, le calculateur considère que le mouvement de translation prédomine sur le mouvement de rotation. Il procède alors à l'acquisition d'une nouvelle seconde image et la seconde image précédemment acquise devient la première image avant de retourner à l'étape 68.

Si le mouvement de rotation prédomine, alors le procédé se poursuit par une étape 84 d'élimination des points aberrants. L'élimination des points aberrants permet d'accroître la précision du calcul sans augmenter le nombre d'opérations de calcul.

Lors de l'étape 84, le calculateur 30 compare chaque déplacement $y_i$ à un seuil prédéterminé $S_2$. Si le déplacement $y_i$ est supérieur à ce seuil $S_2$ alors celui-ci n'est pas pris en compte pour le calcul de l'angle $\theta$ et des coordonnées C du centre de rotation. Par exemple, ici, le seuil $S_2$ est pris égal à trois pixels.

Après l'élimination des points aberrants, il reste N groupe $G_i$ dont les déplacements $y_i$ sont pris en compte pour le calcul de l'angle $\theta$ et des coordonnées C.

De plus, si N est inférieur ou égal à deux, alors l'intervalle $\Delta T$ est diminué. Puis l'on procède à une étape d'acquisition d'une nouvelle seconde image et la précédente seconde image devient la première image. En effet, dans ce cas, il est probable que la vitesse de rotation du doigt est trop rapide et qu'il faille donc augmenter la fréquence d'acquisition des images pour remédier à ce problème.

Si N est supérieur ou égal à trois alors, lors d'une étape 86, le calculateur 30 calcule l'angle $\theta$ et les coordonnées C du centre de rotation. Pour cela, le calculateur 30 calcule la droite de régression linéaire D (Figure 7) passant par les points de coordonnées $(x_i, y_i)$. Pour cela, il calcule les coefficients « a » et « b » qui minimisent la relation suivante :

$$\sum_{i=1}^{i=N} \| y_i - ax_i - b \|$$

où :

- $y_i$ est le déplacement vertical du groupe $G_i$ de pixels,
- $x_i$ est l'ordonnée du groupe $G_i$, et
- $\| ... \|$ est une norme qui donne une valeur absolue représentative de la différence entre le déplacement $y_i$ et $ax_i + b$.

Lors de l'étape 86, les points aberrants ne sont pas pris en compte. Autrement dit les groupes $G_i$ pour lesquels le déplacement $y_i$ dépasse le seuil $S_2$ ne sont pas pris en compte pour le calcul des coefficients « a » et « b ». Si des points aberrants ont été éliminés, le nombre N de groupe $G_i$ peut être plus petit que le nombre P de secteurs Si ou de groupe $G_i$ initialement sélectionné. Toutefois, le nombre N est toujours supérieur ou égal à trois.

Par exemple, ici les coefficients « a » et « b » sont calculés en utilisant la méthode des moindres carrés. Par conséquent, ils sont calculés pour minimiser la relation suivante :

$$\sum_{i=1}^{i=N} \left( y_i - ax_i - b \right)^2$$

L'angle $\theta$ de rotation est alors donné par l'arctangente de la pente « a ». En première approximation étant donné que la pente « a » est généralement petite, l'angle $\theta$ peut être pris égal à la pente « a » ce qui simplifie les calculs.

Le coefficient « b » est l'ordonnée à l'origine et représente la position du centre de rotation le long de l'axe 66. Cette position peut être convertie en coordonnées C exprimées dans un autre référentiel à partir de la position connue de l'axe 66 dans la première image.

Lors de l'étape 86, le calculateur 30 calcule aussi un indicateur I de précision représentatif de la proximité entre les points $(x_i, y_i)$ et la droite D. Cet indicateur I peut être le coefficient de corrélation linéaire, l'écart-type, la variance ou autres. Ici, on suppose que cet indicateur I est l'écart-type.

Lors d'une étape 88, l'indicateur I est comparé à un seuil prédéterminé $S_3$. Si l'indicateur I est inférieur à ce seuil $S_3$, alors cela signifie que l'écart entre les points $(x_i, y_i)$ et la droite D est faible et les résultats sont conservés. Dans le cas contraire, l'angle $\theta$ calculé et les coordonnées calculées lors de l'étape 86 sont éliminés et l'on procède directement à l'acquisition d'une nouvelle image pour remplacer la seconde image.

Lors d'une étape 90, le calculateur ajuste automatiquement la durée de l'intervalle $\Delta T$ en fonction de la valeur de l'angle $\theta$ précédemment calculé.

Par exemple, si la valeur $\theta$ est inférieure à un seuil prédéterminé $S_4$ alors la rotation est trop faible entre deux images. Ceci augmente le bruit et donc l'imprécision sur la valeur de l'angle $\theta$ calculé. Pour remédier à cet inconvénient, la durée de l'intervalle $\Delta T$ est alors augmentée.

La durée de l'intervalle $\Delta T$ peut être augmentée en sautant des images acquises donc sans modifier la fréquence d'acquisition des images par le capteur 8 ou, au contraire, en ralentissant la fréquence d'acquisition des images par le capteur 8.

Ici, la durée de l'intervalle $\Delta T$ est augmentée ou

diminuée ou maintenu constante après chaque calcul de l'angle θ pour maintenir l'angle θ calculé entre 0,5 et 10° et, de préférence, entre 0,5 et 5° ou entre 1 et 3°.

En parallèle de l'étape 90, lors d'une étape 91, le module 36 commande l'écran 4 pour modifier son affichage en fonction de l'angle θ et, éventuellement, des coordonnées C du centre de rotation calculés lors de l'étape 86. Ici, l'affichage de l'écran 4 est modifié pour faire tourner un objet affiché sur l'écran, tel qu'une photo, de l'angle θ autour des coordonnées du centre C. Typiquement, lors de cette étape l'objet affiché tourne autour d'un axe perpendiculaire au plan de l'écran 4.

Ensuite, lors d'une étape 92, le capteur 8 acquiert une nouvelle image après avoir attendu l'intervalle ΔT depuis la dernière acquisition d'une image. La nouvelle image acquise constitue la nouvelle seconde image tandis que l'ancienne seconde image constitue maintenant la première image. Ensuite, les étapes 68 à 92 sont réitérées. Par exemple, lors de l'étape 92, seuls les pixels contenus dans la fenêtre F sont acquis par le capteur 8. Cela limite alors le nombre de pixels à acquérir et donc la consommation électrique du capteur 8.

Le procédé de la figure 4 s'arrête par exemple lorsque l'on retire le doigt de la face 12.

De nombreux autres modes de réalisation sont possibles. Par exemple, la technologie utilisée pour acquérir l'image du motif peut être basée sur des mesures de capacités ou de résistances. Il peut également s'agir d'une technologie optique ou autre. La résolution du capteur 8 est généralement supérieure à 250 ou 380 dpi et de préférence supérieure à 500 dpi.

En variante, le capteur électronique des images du motifs est confondu avec l'écran. Ainsi, l'acquisition de l'angle θ et des coordonnées du centre C se font en tournant le motif, c'est-à-dire typiquement le doigt, sur la surface de l'écran. Cela constitue un mode de réalisation particulièrement ergonomique surtout pour indiquer la position le long des directions X et Y du centre de rotation. En effet, le doigt désigne alors de manière naturelle le centre de rotation où on souhaite appliquer la rotation.

La fenêtre F peut être horizontale ou verticale, ou orientée différemment.

En variante, plusieurs fenêtres F peuvent être simultanément utilisées. Par exemple, une fenêtre verticale et une fenêtre horizontale centrées toutes les deux sur l'estimation grossière de la position du centre de rotation, sont utilisées. Dans ce cas, le procédé précédemment décrit est mis en oeuvre une fois pour la fenêtre verticale puis une seconde fois pour la fenêtre horizontale.

La fenêtre F n'a pas besoin d'être centrée sur le centre de rotation pour que le procédé fonctionne. En effet, quelle que soit la position de la fenêtre dans l'image, le procédé décrit ci-dessus conduit à déterminer un angle θ et des coordonnées du centre C. Toutefois, de préférence, l'axe le plus long de la fenêtre passe par ou au moins à proximité du centre de rotation.

Si la face sensible 12 est relativement petite, la fenêtre F peut être prise égale en taille à la face 12. Cela simplifie l'algorithme et les calculs. En général, dans ce cas, seul l'angle de rotation sert, le centre de rotation étant difficile à désigner du fait de la petitesse du capteur par rapport au doigt.

Les groupes $G_i$, et donc les secteurs Si, peuvent se chevaucher. Dans ce cas, deux groupes $G_i$ immédiatement adjacents le long de l'axe 66 ont des pixels en commun. A l'inverse, les groupes $G_i$ et les secteurs Si peuvent être séparés les uns des autres par des pixels n'appartenant à aucun groupe $G_i$. Dans ce cas, les pixels de deux groupes $G_i$ immédiatement adjacents le long de l'axe 66 sont séparés les uns des autres par des pixels n'appartenant à aucun groupe. Cela permet notamment d'accroître la longueur de la fenêtre F sans accroître le nombre de pixels et donc le nombre d'opérations à réaliser pour calculer l'angle θ et les coordonnées C du centre de rotation.

Les groupes $G_i$ peuvent avoir des formes différentes. Par exemple, dans un autre mode de réalisation, chaque groupe $G_i$ est une ligne de pixels parallèle à la direction F et dont la largeur est égale à celle du secteur Si.

D'autres méthodes peuvent être mises en oeuvre pour localiser grossièrement le centre de rotation du motif. Par exemple, une estimation grossière de la position du centre de rotation peut être obtenue en prenant le barycentre des blocs de pixels ayant les plus petites valeurs moyennes. Ce barycentre peut être calculé en pondérant la position d'un bloc de pixel par sa valeur moyenne.

La sélection de la zone d'intérêt peut être omise. Cela sera par exemple le cas si la face active sensible du capteur 8 est petite et que tous les pixels de cette face peuvent être utilisés sans que cela nécessite une puissance de calcul importante.

Dans le mode de réalisation précédemment décrit du procédé, les déplacements $d_i$ ne sont pas utilisés pour le calcul de l'angle θ ou des coordonnées C du centre de rotation. En variante, ces déplacements $d_i$ sont utilisés pour le calcul des coordonnées du centre de rotation.

Les coefficients « a » et « b » de la droite de régression linéaire peuvent être calculés en utilisant une autre norme ou une autre méthode que la méthode des moindres carrés.

Dans un autre mode de réalisation, l'arctangente de la pente « a » ou au moins un développement limité de l'arctangente de la pente « a » est calculé pour obtenir l'angle θ. Eventuellement, ce calcul n'est réalisé que si la pente « a » dépasse un seuil prédéterminé. En dessous de ce seuil, l'angle θ est pris égal à la pente « a ».

Les tailles des secteurs Si ne sont pas nécessairement toutes identiques. Par exemple, la hauteur des secteurs $S_i$ à proximité des extrémités droite et gauche de la fenêtre F peut être plus grande que la hauteur des secteurs Si proches du centre de rotation. En effet, le déplacement $y_i$ du groupe $G_i$ contenu dans un secteur

$S_i$ proche d'une extrémité de la fenêtre sera probablement plus grand que celui d'un groupe $G_i$ contenu dans un secteur Si proche du centre de rotation.

Le procédé précédent a été décrit dans le cas particulier où le motif dont on détecte la rotation est une empreinte digitale portée par un doigt. Toutefois, ce procédé peut calculer un angle de rotation et les coordonnées d'un centre de rotation à partir de la rotation d'autres motifs détectables par le capteur 8 réalisés dans d'autres matériaux. Par exemple, le motif peut se trouver sur un matériau tel que du tissu ou du cuir. Ce matériau peut par exemple être celui d'un gant porté par l'utilisateur. En fait, le procédé décrit ci-dessus s'applique à tout motif dont l'image acquise ne présente pas de symétrie de révolution comme c'est le cas pour une empreinte digitale ou la texture d'autre matériau comme le cuire, un tissu ou autre. Dès lors, en variante, il est également possible de remplacer le doigt de l'utilisateur par un autre objet portant ce motif. Par exemple, le motif peut se trouver à l'extrémité d'un stylet manipulé par l'utilisateur.

Le procédé décrit précédemment s'applique également à l'acquisition d'un angle de rotation et des coordonnées d'un centre de rotation à l'aide d'une souris optique. Dans ce cas, la souris optique est déplacée en rotation autour d'un axe perpendiculairement au plan sur lequel elle se déplace. Cette souris optique acquiert les première et seconde images d'un même motif et le procédé précédemment décrit est mis en oeuvre pour déterminer à partir de ces images un angle et un centre de rotation. Dans ce cas, le motif est, par exemple, une partie d'un tapis de souris ou du dessus d'une table. Ces motifs présentent, comme une empreinte digitale, des lignes ou des points contrastés qui permettent d'obtenir un image ne présentant pas de symétrie de révolution. Dans ce dernier mode de réalisation, c'est le capteur électronique qui est tourné plutôt que le motif. Toutefois, ceci ne change en rien le procédé décrit ici.

**Revendications**

1. Procédé d'acquisition d'un angle de rotation et des coordonnées d'un centre de rotation, ce procédé comportant :

> - l'acquisition (54) par un capteur électronique d'une première image d'un motif avant sa rotation autour d'un axe perpendiculaire au plan de l'image,
> - la rotation du motif par rapport au capteur électronique, par un être humain, autour de l'axe perpendiculaire au plan de l'image,
> - l'acquisition par le capteur électronique d'une seconde image du même motif après cette rotation, ces images étant formées de pixels enregistrés dans une mémoire électronique,
> - la sélection (68, 84), par un calculateur électronique, dans la première image de N groupes

$G_i$ différents de pixels, ces groupes $G_i$ de pixels étant alignés le long d'un même axe d'alignement et chaque groupe $G_i$ étant associé à une ordonnée $x_i$ respective le long de cet axe, l'indice i identifiant le groupe $G_i$ parmi les N groupes $G_i$ de pixels,

> - pour chaque groupe $G_i$, le calcul (72), par le calculateur électronique, d'un déplacement $y_i$ du groupe $G_i$ entre les première et seconde images dans une direction perpendiculaire à l'axe d'alignement en comparant les première et seconde images, la valeur du déplacement $y_i$ étant obtenue par calcul de corrélation entre des pixels de la première image appartenant au groupe G, et des pixels de la seconde image,

**caractérisé en ce que** le procédé comporte le calcul (86), par le calculateur électronique, de l'angle de rotation et des coordonnées du centre de rotation à partir des coefficients « a » et « b » d'une droite de régression linéaire qui minimise la relation suivante :

$$\sum_{i=1}^{i=N} \| y_i - ax_i - b \|$$

où :
- $\| ... \|$ est une norme, et
- N est le nombre entier de groupes $G_i$, N étant supérieur ou égal à trois.

2. Procédé selon la revendication 1, dans lequel le calculateur électronique :

> - positionne (62) une fenêtre au même endroit dans les images acquises, cette fenêtre étant au moins deux fois plus longue que large et plus petite que chaque image, et
> - réalise le calcul (72) de chaque déplacement $y_i$ en traitant uniquement les pixels des première et seconde images contenus dans cette fenêtre.

3. Procédé selon la revendication 2, dans lequel le capteur électronique acquière (92) seulement les pixels contenus dans cette fenêtre.

4. Procédé selon l'une quelconque des revendications 2 à 3, dans lequel le calculateur électronique :

> - découpe (64) la fenêtre en au moins N secteurs Si, chaque secteur Si de la première image comprenant tous les pixels d'un groupe respectif $G_i$ de pixels, et
> - réalise le calcul (72) de chaque déplacement $y_i$ en traitant uniquement les pixels des première et seconde images contenus dans le secteur Si correspondant.

**5.** Procédé selon l'une quelconque des revendications précédentes, dans lequel le calculateur électronique :

- compare (84) le déplacement $y_i$ à un seuil prédéterminé, et
- si ce seuil prédéterminé est franchi, alors le déplacement $y_i$ et l'ordonnée xi qui lui est associée ne sont pas pris en compte lors du calcul de l'angle de rotation et des coordonnées du centre de rotation et, dans le cas contraire, le déplacement $y_i$ et l'ordonnée $x_i$ associée sont pris en compte pour ce calcul.

**6.** Procédé selon l'une quelconque des revendications précédentes, dans lequel le calculateur électronique ajuste (90) l'intervalle de temps entre les première et seconde images en fonction de l'angle de rotation calculé à partir d'au moins une image acquise avant ces première et seconde images pour maintenir l'angle de rotation calculé entre 0,5° et 10°.

**7.** Procédé de commande d'un écran d'affichage, ce procédé comportant la commande (91), par un calculateur électronique, de l'écran pour faire tourner un objet affiché sur cet écran en fonction d'un angle de rotation acquis et des coordonnées d'un centre de rotation, **caractérisé en ce que** le procédé comprend également l'acquisition de l'angle de rotation en mettant en oeuvre un procédé conforme à l'une quelconque des revendications précédentes.

**8.** Support (38) d'enregistrement d'informations, **caractérisé en ce qu'**il comporte des instructions pour l'exécution d'un procédé conforme à l'une quelconque des revendications précédentes, lorsque ces instructions sont exécutées par un calculateur électronique.

**9.** Appareil équipé :

- d'un écran (4),
- d'un capteur électronique (8) apte à acquérir une première image d'un motif avant sa rotation par rapport au capteur électronique, par un être humain, autour d'un axe perpendiculaire au plan de l'image et une seconde image du même motif après cette rotation, ces images étant formées de pixels enregistrés dans une mémoire électronique, et
- d'un calculateur électronique (30) programmé pour commander l'écran de manière à faire tourner un objet affiché sur cet écran en fonction d'un angle de rotation acquis et des coordonnées d'un centre de rotation, et pour acquérir l'angle de rotation :

• en sélectionnant dans la première image N groupes $G_i$ différents de pixels, ces groupes $G_i$ de pixels étant alignés le long d'un même axe d'alignement et chaque groupe $G_i$ étant associé à une ordonnée xi respective le long de cet axe, l'indice i identifiant le groupe $G_i$ parmi les N groupes $G_i$ de pixels,
• pour chaque groupe $G_i$, en calculant un déplacement $y_i$ du groupe $G_i$ entre les première et seconde images dans une direction perpendiculaire à l'axe d'alignement en comparant les première et seconde images, la valeur du déplacement $y_i$ étant obtenue par calcul de corrélation entre des pixels de la première image appartenant au groupe $G_i$ et des pixels de la seconde image, **caractérisé en ce que** le calculateur électronique (30) est également programmé pour calculer l'angle de rotation et les coordonnées du centre de rotation à partir des coefficients « a » et « b » d'une droite de régression linéaire qui minimise la relation suivante :

$$\sum_{i=1}^{i=N} \| y_i - ax_i - b \|$$

où :

- $\| ... \|$ est une norme, et
- N est le nombre entier de groupes $G_i$, N étant supérieur ou égal à trois.

**10.** Appareil selon la revendication 9, dans lequel le capteur électronique est un capteur d'empreinte digitale ou une souris optique.

Fig. 1

Fig. 2

Fig. 3

Fig. 4

Fig. 5

Fig. 6

Fig. 7

Europäisches
Patentamt

European
Patent Office

Office européen
des brevets

**RAPPORT DE RECHERCHE EUROPEENNE**

Numéro de la demande

EP 12 17 5820

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 5 563 403 A (BESSHO GOROH [JP] ET AL) 8 octobre 1996 (1996-10-08) * colonne 1, ligne 18 - ligne 22 * * colonne 4, ligne 10 - colonne 5, ligne 14; figures 1-4 * ----- | 1-10 | INV. G06K9/00 G06K9/32 ADD. G06F3/033 |
| X | US 4 558 461 A (SCHLANG ARTHUR [US]) 10 décembre 1985 (1985-12-10) * colonne 1, ligne 37 - ligne 46 * * colonne 1, ligne 62 - ligne 66 * * colonne 5, ligne 62 - colonne 8, ligne 56; figures 5-9 * ----- | 1-10 | |
| X | JP 10 027246 A (MATSUSHITA ELECTRIC WORKS LTD) 27 janvier 1998 (1998-01-27) * abrégé; figure 1 * ----- | 1-10 | |
| T | Michael Berthold et David J. Hand: "Intelligent Data Analysis", 1 janvier 2007 (2007-01-01), Springer, XP002675890, pages 46-49, * page 47, ligne 37 * ----- | 1-10 | DOMAINES TECHNIQUES RECHERCHES (IPC) G06K G06T G06F |
| T | Hamid Aghajan et al: "Human-Centric Interfaces for Ambient Intelligence", 1 janvier 2010 (2010-01-01), Academic Press, XP002675891, page 310, * page 310, ligne 1,16 * ----- | 7 | |
| T | Bodo Rosenhahn et al: "Human Motion", 1 janvier 2008 (2008-01-01), Springer, XP002675892, pages 421-422, * page 422, ligne 9 - ligne 24 * ----- | 1-10 | |

-/--

Le présent rapport a été établi pour toutes les revendications

| Lieu de la recherche | Date d'achèvement de la recherche | Examinateur |
|---|---|---|
| La Haye | 18 décembre 2012 | Granger, Bruno |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
................................................................
& : membre de la même famille, document correspondant

EPO FORM 1503 03.82 (P04C02)

Europäisches
Patentamt

European
Patent Office

Office européen
des brevets

**RAPPORT DE RECHERCHE EUROPEENNE**

Numéro de la demande

EP 12 17 5820

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| T | David A. Forsyth and Jean Ponce: "Computer Vision, a Modern Approach", 1 janvier 2003 (2003-01-01), Pearson, XP002675893, page 334, * page 334, alinéa 1 - alinéa 2 * ----- | 1-10 | |
| T | Rhodri Davies et al: "Statistical Models of Shape", 1 janvier 2008 (2008-01-01), Springer, XP002675894, pages 11-12, * equation (2.5); page 12, alinéa 2 * ----- | 1-10 | |
| T | Al. Bovik: "Handbook of Image Processing, 2nd ed.", 1 janvier 2005 (2005-01-01), Springer, XP002689490, page 209, * page 209, colonne de droite, ligne 3 - ligne 12 * ----- | 1-10 | |

**DOMAINES TECHNIQUES RECHERCHES (IPC)**

Le présent rapport a été établi pour toutes les revendications

| Lieu de la recherche | Date d'achèvement de la recherche | Examinateur |
|---|---|---|
| La Haye | 18 décembre 2012 | Granger, Bruno |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 12 17 5820

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

18-12-2012

| Document brevet cité au rapport de recherche | | Date de publication | Membre(s) de la famille de brevet(s) | | Date de publication |
|---|---|---|---|---|---|
| US 5563403 | A | 08-10-1996 | JP | 3338537 B2 | 28-10-2002 |
| | | | JP | 7192086 A | 28-07-1995 |
| | | | US | 5563403 A | 08-10-1996 |
| US 4558461 | A | 10-12-1985 | AUCUN | | |
| JP 10027246 | A | 27-01-1998 | JP | 3823379 B2 | 20-09-2006 |
| | | | JP | 10027246 A | 27-01-1998 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20050012714 A
- US 20010036299 A
- US 5563403 A
- US 4558461 A
- JP 10027246 A
- US 6091837 A
- FR 1053554